# EUROPÄISCHE PATENTANMELDUNG

(11) **EP 4 484 873 A1**
(43) Veröffentlichungstag der Anmeldung: **01.01.2025**
(21) Anmeldenummer: 23181428.6
(22) Anmeldetag: 26.06.2023
(51) Int. Cl.: F27B 17/02, A61C 13/15

(54) **BELICHTUNGSGERÄT ZUM BELEUCHTEN EINES DENTALOBJEKTS**

(71) Anmelder: Ivoclar Vivadent AG, 9494 Schaan (LI)
(72) Erfinder: Niedrig, Christian, 9487 Azmoos (CH); Rampf, Markus, 7212 Seewis (CH); Ritzberger, Christian, 9472 Grabs (CH); Dittmer, Marc, 6800 Feldkirch (AT)
(74) Vertreter: Baldus, Oliver

(57) **Zusammenfassung**

Die vorliegende Erfindung betrifft ein Belichtungsgerät (100) zum Beleuchten eines Dentalobjekts (101), mit einer Kammer (103) zur Aufnahme des Dentalobjekts (101); und einer Strahlungsquelle (105) zum Belichten des Dentalobjekts (101) mit einer Wellenlänge, die größer als 350 nm ist, und mit einer Leistungsdichte, die größer als 10 W/cm² ist.

## Beschreibung

Die vorliegende Erfindung betrifft ein Belichtungsgerät zum Beleuchten eines Dentalobjekts und ein Verfahren zum Beleuchten eines Dentalobjekts.

Polychrome Gläser und Glaskeramiken können durch eine Belichtung zusammen mit einer thermischen Behandlung eingefärbt werden, wie beispielsweise ein Quarzglas, eine Quarz-Glaskeramik, ein Lithiumaluminosilikatglas, eine Lithiumalumosilikat-Glaskeramik, ein Lithiumsilikatglas oder eine Lithiumsilikat-Glaskeramik. Die Belichtung erfolgt hierbei üblicherweise mittels UV-Strahlung. Die unterschiedliche Farbwirkung wird nach erfolgter Belichtung hauptsächlich über eine Temperaturbehandlung hergestellt.

Die Belichtung mit UV-Strahlung weist jedoch eine geringe Eindringtiefe in die Glaskeramik auf. UV-Laser, UV-LED und UV-Optiken sind technisch aufwändig und weisen große Abmessungen auf.

Es ist die technische Aufgabe der vorliegenden Erfindung, die Farbgebung eines Dentalobjekts effizient und mit geringerem technischen Aufwand durchzuführen.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Belichtungsgerät zum Beleuchten eines Dentalobjekts gelöst, mit einer Kammer zur Aufnahme des Dentalobjekts; und einer Strahlungsquelle zum Belichten des Dentalobjekts mit einer Wellenlänge, die größer als 350 nm ist, und mit einer Leistungsdichte, die größer als 10 W/cm² ist. Das Dentalobjekt kann an einer vorgesehenen Position im Inneren der Kammer durch Strahlung mit einer Wellenlänge, die größer als 350 nm ist, und mit einer Leistungsdichte belichtet werden, die größer als 10 W/cm² ist. Die Leistungsdichte kann auch über 100 W/cm² oder über 1kW/cm² liegen. Durch diese Leistungsdichten können Mehrphotonenprozesse innerhalb des Dentalobjektes angeregt werden.

Durch das Belichtungsgerät wird der technische Vorteil erreicht, dass eine größere Eindringtiefe der Strahlung in das Material bei der Farbgebung des Dentalobjekts erreicht wird. Dadurch ist das gesamte Volumen des Dentalobjekts belichtbar und aktivierbar. Bei einer Verwendung einer Wellenlänge, die größer als 350 nm ist, können effizientere Geräte und Optiken verwendet werden und es sind kürzere Belichtungszeiten realisierbar.

In einer technisch vorteilhaften Ausführungsform des Belichtungsgeräts ist die Strahlungsquelle ausgebildet, das Dentalobjekt mit einer Wellenlänge zu belichten, die größer als 700 nm ist. Dadurch wird beispielsweise der technische Vorteil erreicht, dass noch größere Eindringtiefen erreicht werden.

In einer weiteren technisch vorteilhaften Ausführungsform des Belichtungsgeräts ist die Strahlungsquelle ausgebildet, Strahlung mit einer Leistung von größer als 1 W auszusenden. Ein Laser könnte die Fläche beispielsweise mit 10000 Belichtungspunkten abrastern. Bei einer Belichtungszeit von 0.1 Sekunden pro Belichtungspunkt beträgt die gesamte Belichtungszeit 1000 Sekunden. In diesem Fall kann dann eine Ausgangsleistung des Lasers von 1 W genügen. Dadurch wird beispielsweise der technische Vorteil erreicht, dass das Dentalobjekt effizient beleuchtet werden kann.

In einer weiteren technisch vorteilhaften Ausführungsform des Belichtungsgeräts ist die Strahlungsquelle durch einen Laser, eine Leuchtdiode oder eine Quecksilberdampflampe gebildet. Dadurch wird beispielsweise der technische Vorteil erreicht, dass die Strahlung zum Beleuchten des Dentalobjekts effizient erzeugt werden kann.

In einer weiteren technisch vorteilhaften Ausführungsform des Belichtungsgeräts ist der Laser ein Ti-Saphir-Laser oder ein Nd-YAG-Laser. Dadurch wird beispielsweise der technische Vorteil erreicht, dass die Leistungsdichte auf einfache Weise erzeugt werden kann und ohne Verluste auf das Dentalobjekt aufgestrahlt werden kann.

In einer weiteren technisch vorteilhaften Ausführungsform des Belichtungsgeräts ist die Strahlungsquelle ausgebildet, Strahlung in einem Wellenlängenbereich zwischen 350 nm und 1800 nm, bevorzugt zwischen 350 nm und 1500 nm und besonders bevorzugt zwischen 350 nm und 1100 nm auszusenden. Dadurch wird beispielsweise der technische Vorteil erreicht, dass die Farbgebung des Dentalobjekts effizient durchgeführt werden kann.

In einer weiteren technisch vorteilhaften Ausführungsform des Belichtungsgeräts umfasst das Belichtungsgerät eine Intensitätseinstellungseinrichtung zum Einstellen einer Strahlungsintensität der Strahlungsquelle. Dadurch wird beispielsweise der technische Vorteil erreicht, dass eine Intensität der Belichtung in Abhängigkeit eines verwendeten Materials eingestellt werden kann.

In einer weiteren technisch vorteilhaften Ausführungsform des Belichtungsgeräts beträgt eine maximale und/oder durchschnittliche Strahlungsintensität der Strahlungsquelle 100 W oder 300 W. Bei einem Laser kann die durchschnittliche Strahlungsintensität über eine Vielzahl von Laserpulsen gemittelt sein. Bei einer Leuchtdiode oder Quecksilberdampflampe kann die durchschnittliche Strahlungsintensität kontinuierlich über die Zeit ermittelt werden. Dadurch wird beispielsweise der technische Vorteil erreicht, dass ein zu starkes Belichten des Dentalobjekts verhindert wird.

In einer weiteren technisch vorteilhaften Ausführungsform des Belichtungsgeräts umfasst das Belichtungsgerät eine Zeitschaltvorrichtung zum Aktivieren der Strahlungsquelle für einen vorgegebenen Zeitraum. Dadurch wird beispielsweise der technische Vorteil erreicht, dass eine vorgegebene Energie pro Fläche auf das Dentalobjekt eingestrahlt werden kann.

Gemäß einem zweiten Aspekt wird die technische Aufgabe durch ein Verfahren zum Beleuchten eines Dentalobjekts gelöst, mit dem Schritt eines Belichtens des Dentalobjektes mit einer Wellenlänge, die größer als 350 nm ist, und einer Leistungsdichte, die größer als 10 W/cm² ist. Durch das Verfahren werden die gleichen technischen Vorteile wie durch das Belichtungsgerät nach dem ersten Aspekt erreicht.

In einer technisch vorteilhaften Ausführungsform des Verfahrens ist die Wellenlänge größer als 500 oder 700 nm. Dadurch wird beispielsweise ebenfalls der technische Vorteil erreicht, dass noch größere Eindringtiefen erreicht werden.

In einer weiteren technisch vorteilhaften Ausführungsform des Verfahrens beträgt die Leistung der Strahlung mehr als 1 W. Dadurch wird beispielsweise ebenfalls der technische Vorteil erreicht, dass das Dentalobjekt effizient beleuchtet werden kann.

In einer weiteren technisch vorteilhaften Ausführungsform des Verfahrens wird die Strahlung in einem Wellenlängenbereich zwischen 350 nm und 1800 nm, bevorzugt zwischen 350 nm und 1500 nm und besonders bevorzugt zwischen 350 nm und 1100 nm ausgesendet. Eine Farbgebung kann zudem durch thermische Behandlung erreicht werden. Dadurch wird beispielsweise der technische Vorteil erreicht, dass die Farbgebung oder Belichtung des Dentalobjekts effizient durchgeführt werden kann.

In einer weiteren technisch vorteilhaften Ausführungsform des Verfahrens wird das Dentalobjekt für einen vorgegebenen Zeitraum belichtet. Dadurch wird beispielsweise der technische Vorteil erreicht, dass eine vorgegebene Energie pro Fläche auf das Dentalobjekt eingestrahlt werden kann.

Gemäß einem dritten Aspekt wird die technische Aufgabe durch ein Belichtungssystem mit einem Belichtungsgerät nach dem ersten Aspekt und einem Dentalobjekt gelöst, das ein polychromes Glas und oder eine polychrome Glaskeramik umfasst. Durch das Belichtungssystem werden die gleichen technischen Vorteile wie durch das Belichtungsgerät nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Ansicht eines Belichtungsgerätes; und
- Fig. 2: ein Blockdiagramm eines Verfahrens zum Beleuchten des Dentalobjekts.

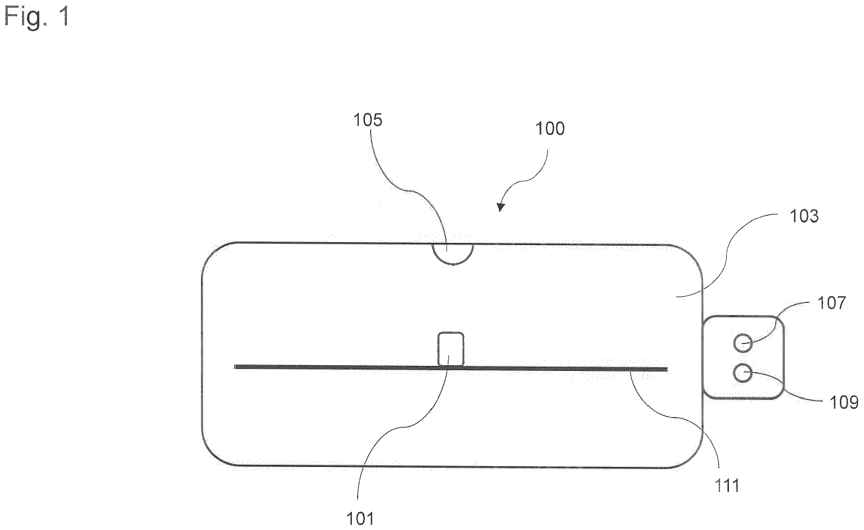

Fig. 1 zeigt eine schematische Ansicht eines Belichtungsgerätes 100. Das Belichtungsgerät 100 dient zum Belichten und Aktivieren eines Dentalobjekts 101, das aus einem polychromen Glas und oder einer polychromen Glaskeramik hergestellt ist. Das Dentalobjekt 101 ist eine dentale Restauration, wie beispielsweise eine Krone, eine Brücke, ein Veneer, ein Abutment, ein Inlay oder ein Onlay.

Die polychromen Gläser und Glaskeramiken umfassen hierzu beispielsweise eine oxidierbare Komponente und eine reduzierbare Färbekomponente. Die oxidierbare Komponente ist eine Komponente, die durch Bestrahlung oxidiert werden bzw. zur Elektronenabgabe angeregt werden kann. Oxidierbare Komponenten sind beispielsweise Cer-Ionen, Europium-Ionen, Erbium-Ionen, Kupfer-Ionen und deren Mischungen. Die reduzierbare Färbekomponente ist beispielsweise eine Komponente, die unter Ausbildung einer Farbänderung reduziert werden kann. Bevorzugte reduzierbare Färbekomponenten sind Kationen von Metallen, wie beispielsweise von Silber, Gold, Kupfer oder deren Kombinationen.

Das Belichtungsgerät 100 umfasst eine Kammer 103, in die das Dentalobjekt 101 angeordnet wird, um dieses einer Beleuchtung zu unterziehen. Das Belichtungsgerät 100 umfasst eine vorgesehene Position 111 für das zu belichtende Dentalobjekt 101, wie beispielsweise eine Ablagefläche oder einen Halter für das Dentalobjekt 101. Die Kammer 103 kann mit reflektierenden Wänden ausgebildet sein, um die Intensität der Strahlung am Ort des Dentalobjekts 101 zu erhöhen. Die Strahlungsquelle 105 ist beispielsweise in einer Deckenwand der Kammer 103 angeordnet. Im Allgemeinen kann die Strahlungsquelle 105 jedoch auch an anderen Positionen angeordnet sein, solange das Dentalobjekt mit der vorgesehenen Leistungsdichte beleuchtet wird.

Eine Strahlungsquelle 105 dient zum Belichten des Dentalobjekts 101 an der vorgesehenen Position 111 mit einer Wellenlänge, die größer als 350 nm ist, und mit einer Leistungsdichte an der vorgesehenen Position 111, die größer als 10 W/cm² ist. Geeignete Strahlungsquellen 105 sind in diesem Zusammenhang beispielsweise ein Nd-YAG-Laser oder Ti-Saphir-Laser. Bei der Verwendung eines Lasers kann die Strahlung direkt und zielgerichtet auf das Dentalobjekt 101 gerichtet werden.

Die Strahlungsquelle 105 kann auch durch eine geeignete Leuchtdiode oder eine Quecksilberdampflampe gebildet sein. Im Allgemeinen können alle Strahlungsquellen 105 verwendet werden, die in der Lage sind, Strahlung mit einer Wellenlänge, die größer als 350 nm ist, und mit einer Leistungsdichte auszugeben, die größer als 10 W/cm² ist.

Das Belichtungsgerät 100 umfasst eine Intensitätseinstellungseinrichtung 107 zum Einstellen einer Strahlungsintensität der Strahlungsquelle 105. Dadurch kann die Intensität der Strahlung erhöht oder vermindert werden. Die Intensitätseinstellungseinrichtung 107 umfasst beispielsweise eine elektrische Steuerung, mit der die Strahlungsintensität der Strahlungsquelle 105 verändert werden kann. Zu diesem kann ein manueller Regler vorgesehen sein, durch den der Benutzer die Strahlungsintensität der Strahlungsquelle 105 einstellen kann. Der Regler kann durch eine mechanische Schnittstelle oder eine elektronische Schnittstelle gebildet sein.

Ferner umfasst das Belichtungsgerät 100 eine Zeitschaltvorrichtung 109 zum Aktivieren der Strahlungsquelle 105 für einen vorgegebenen Zeitraum. Die Zeitschaltvorrichtung 109 ist beispielsweise eine elektrische Steuerung, die die Strahlungsquelle für einen vorgegebenen Zeitraum einschaltet, wie beispielsweise 60 s. Zu diesem kann ebenfalls ein manueller Regler vorgesehen sein, durch den der Benutzer den Zeitraum einstellen kann. Der Regler kann durch eine mechanische Schnittstelle oder eine elektronische Schnittstelle gebildet sein.

Das Belichtungsgerät 100 kann eine elektronische Steuereinrichtung (Controller) umfassen, mit der die Strahlungsquelle 105 und andere Funktionen des Belichtungsgerätes 100 gesteuert werden können. Die Steuereinrichtung kann einen Mikroprozessor umfassen, durch den unterschiedliche Steuerprogramme ausgeführt werden können. Zudem kann das Belichtungsgerät 100 eine Heizeinrichtung zum Erwärmen des Dentalobjekts 101 oder eine Formgebungseinrichtung zum Formen des Dentalobjekts 101 umfassen.

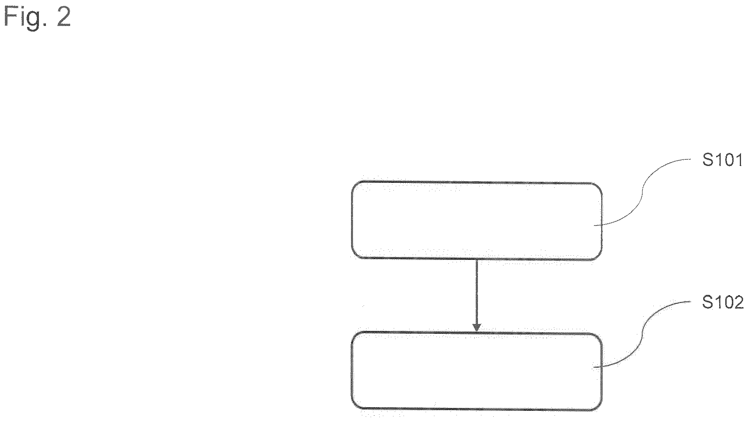

Fig. 2 zeigt ein Blockdiagramm eines Verfahrens zum Beleuchten des Dentalobjekts 101. In Schritt S101 wird das Dentalobjekt 101 in einer Kammer 103 des Belichtungsgerätes 100 an einer vorgesehenen Position angeordnet. In Schritt S102 wird das Dentalobjekt 101 mit einer Wellenlänge, die größer als 350 nm ist, und einer Leistungsdichte belichtet, die größer als 10 W/cm² ist. Dadurch wird das Dentalobjekt aktiviert, so dass eine Farbgebung erfolgen kann, beispielsweise bei einer Temperaturbehandlung. Zusätzlich kann das Verfahren den Schritt eines Herstellens oder Formens des Dentalobjekts oder den Schritt einer thermischen Behandlung des Dentalobjekts umfassen.

Durch die Verwendung von Strahlung mit einer Wellenlänge, die größer als 350 nm ist, ist es möglich, in einer größeren Eindringtiefe im Volumen des Materials des Dentalobjekts 101 zu belichten. Außerdem ist die effektive Belichtungszeit wesentlich kürzer. Die Belichtung und Aktivierung der Gläser und Glaskeramiken zur Erreichung einer Farbgebung im gesamten Volumen nach thermischer Behandlung kann mit dieser Strahlung effizienter durchgeführt werden. Eine Belichtung oder Aktivierung kann im gesamten Materialvolumen des Dentalobjekts 101 durchgeführt werden.

Bei Verwendung von Strahlung mit einer Wellenlänge, die größer als 350 nm ist, sind kleinere und einfachere Geräte und Optiken einsetzbar und kürzere Belichtungszeiten zur Farbgebung realisierbar. Das Belichtungsgerät 100 kann zusammen mit einem Herstellungsverfahren (CAM - Computer Aided Manufacturing) angewendet werden. In diesem Fall kann eine Belichtung oder Aktivierung während der abtragenden Formgebung des Dentalobjekts durchgeführt werden. Das Belichtungsgerät 100 kann zusammen mit einem thermischen Verfahren verwendet werden, beispielsweise in einem Ofen. In diesem Fall kann eine Belichtung oder Aktivierung während einer thermischen Vergütung, Kristallisation oder Sinterung durchgeführt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Belichtungsgerät
- 101: Dentalobjekt
- 103: Kammer
- 105: Strahlungsquelle
- 107: Intensitätseinstellungseinrichtung
- 109: Zeitschaltvorrichtung
- 111: Position

## Patentansprüche

1. Belichtungsgerät (100) zum Beleuchten eines Dentalobjekts (101), mit:
- einer Kammer (103) zur Aufnahme des Dentalobjekts (101); und
- einer Strahlungsquelle (105) zum Belichten des Dentalobjekts (101) mit einer Wellenlänge, die größer als 350 nm ist, und mit einer Leistungsdichte, die größer als 10 W/cm² ist.

2. Belichtungsgerät (100) nach Anspruch 1, wobei die Strahlungsquelle (105) ausgebildet ist, das Dentalobjekt (101) mit einer Wellenlänge zu belichten, die größer als 500 nm oder 700 nm ist.

3. Belichtungsgerät (100) nach einem der vorangehenden Ansprüche, wobei die Strahlungsquelle (105) ausgebildet ist, Strahlung mit einer Leistung von größer als 1 W auszusenden.

4. Belichtungsgerät (100) nach einem der vorangehenden Ansprüche, wobei die Strahlungsquelle (105) durch einen Laser, eine Leuchtdiode oder eine Quecksilberdampflampe gebildet ist.

5. Belichtungsgerät (100) nach Anspruch 4, wobei der Laser ein Ti-Saphir-Laser oder ein Nd-YAG-Laser ist.

6. Belichtungsgerät (100) nach einem der vorangehenden Ansprüche, wobei die Strahlungsquelle (105) ausgebildet ist, Strahlung in einem Wellenlängenbereich zwischen 350 nm und 1800 nm, bevorzugt zwischen 350 nm und 1500 nm und besonders bevorzugt zwischen 350 und 1100 nm auszusenden.

7. Belichtungsgerät (100) nach einem der vorangehenden Ansprüche, wobei das Belichtungsgerät (100) eine Intensitätseinstellungseinrichtung (107) zum Einstellen einer Strahlungsintensität der Strahlungsquelle (105) umfasst.

8. Belichtungsgerät (100) nach einem der vorangehenden Ansprüche, wobei eine maximale und/oder durchschnittliche Strahlungsintensität der Strahlungsquelle (105) 100 W oder 300 W beträgt.

9. Belichtungsgerät (100) nach einem der vorangehenden Ansprüche, wobei das Belichtungsgerät (100) eine Zeitschaltvorrichtung (109) zum Aktivieren der Strahlungsquelle (105) für einen vorgegebenen Zeitraum umfasst.

10. Verfahren zum Beleuchten eines Dentalobjekts (101), mit dem Schritt:
- Belichten (S102) des Dentalobjekts (101) mit einer Wellenlänge, die größer als 350 nm ist, und einer Leistungsdichte, die größer als 10 W/cm² ist.

11. Verfahren nach Anspruch 10, wobei die Wellenlänge größer als 700 nm ist.

12. Verfahren nach Anspruch 10 oder 11, wobei die Leistung der Strahlung mehr als 1 W beträgt.

13. Verfahren nach einem der Ansprüche 10 bis 12, wobei die Strahlung in einem Wellenlängenbereich zwischen 350 nm und 1800 nm, bevorzugt zwischen 350 nm und 1500 nm und besonders bevorzugt zwischen 350 nm und 1100 nm ausgesendet wird.

14. Verfahren nach einem der Ansprüche 10 bis 13, wobei das Dentalobjekt (101) für einen vorgegebenen Zeitraum belichtet wird.

15. Belichtungssystem (200) mit einem Belichtungsgerät (100) nach einem der Ansprüche 1 bis 9 und einem Dentalobjekt (101), das ein polychromes Glas und oder eine polychrome Glaskeramik umfasst.
